# EUROPEAN PATENT APPLICATION

(11) **EP 4 751 964 A1**
(43) Date of publication of application: **03.06.2026**
(21) Application number: 25217196.2
(22) Date of filing: 20.11.2025
(51) Int. Cl.: B60K 35/10, F16H 59/02

(54) **COMMAND DEVICE FOR A MOTOR VEHICLE AND MOTOR VEHICLE COMPRISING THE SAME**

(30) Priority: 27.11.2024 IT 202400026784
(71) Applicant: FERRARI S.p.A., 41100 Modena (IT)
(72) Inventor: BALLATORE, Marco, 41100 MODENA (IT); CONIGLIARO, Vito, 41100 MODENA (IT)
(74) Representative: Studio Torta S.p.A.

(57) **Abstract**

A command device (10; 10'; 10''; 10‴) for a motor vehicle (1; 1'; 1"; 1‴) comprising a base (11) configured to be fixed to a portion (2) of the motor vehicle (1; 1'; 1"; 17‴) and comprising a guide (12; 12''). The command device also comprises a movable selector (13; 13‴), which is movable along the guide (12; 12'') and comprises, in turn, a stem (30) and a knob (31; 31‴), which is operatively connected to the stem (30). The knob (31; 31‴) comprises at least one selection device (32; 34‴, 35‴) configured to receive, in use, an input from a user and to generate a corresponding signal indicative of said input. The command device (10; 10') further comprises an electronic control unit (51; 51'; 51‴) operatively connected to the selection device (32; 34‴, 35‴). The electronic control unit (51; 51'; 51‴) is configured to control at least one parameter associated with the motor vehicle (1; 1'; 1''; 1‴) based on said signal.

## Description

### CROSS-REFERENCE TO RELATED APPLICATIONS

This patent application claims priority from Italian patent application no. 102024000026784 filed on November 27, 2024, the entire disclosure of which is incorporated herein by reference.

### TECHNICAL FIELD

The invention relates to a command device for a motor vehicle.

### BACKGROUND

In general, the operation of motor vehicles depends on a large number of variables, some of which are directly or indirectly controllable by users. In particular, in a known manner, motor vehicles are provided with command devices of various types (steering wheels, levers, pedals, buttons, etc.), which are configured to allow users to control these variables.

The progressive improvement of motor vehicles has made it possible to increase the accuracy with which at least some of the controllable variables can be adjusted and, over time, has led to motor vehicles being equipped with additional functions.

These considerations apply, in particular, to electric or hybrid vehicles.

In light of the above, there is a need to increase the versatility and ease of controlling the aforementioned variables when driving the motor vehicles.

An object of the invention is to fulfil the need discussed above, preferably in a simple and cost-effective fashion.

WO2015069311A1 discloses a capacitive track pad transmission shift knob.

US9383000B2 discloses a gearshift knob for a gearshift lever of a vehicle and a method for operating a vehicle.

WO2007121977A2 discloses a vehicle cockpit with a vehicle steering wheel having a steering wheel outer surface accessible to a user, the steering wheel being designed such that finger movements on the steering wheel outer surface may be recorded by the same, an analytical circuit for generating analysed signals dependent on the finger movement on the steering wheel outer surface and a contacting position and a slave system controlled according to a control signal, the control signal being generated based on the analysed signal.

DE102019213863A1 discloses a control device for a motor vehicle, comprising at least one control element for changing and/or selecting an operating mode or an operating parameter of the motor vehicle, in particular a target speed stored in a cruise control system of the motor vehicle, wherein the control element is arranged or formed on or in a selector device, in particular a selector lever.

CN113669440A discloses an electronic gear shifting system and a vehicle. The electronic gear shifting system comprises a seat body, a gear shifting part and a controller, wherein the gear shifting part is movably arranged on the seat body, the controller is constructed to be suitable for obtaining a target position and a target function of the gear shifting part and generating a corresponding control instruction according to the target position and the target function, the controller is suitable for controlling an executing mechanism corresponding to the target function to execute the control instruction, the target functions comprise a gear shifting function and a non-gear shifting function. According to the electronic gear shifting system, gear shifting or other multiple functions can be achieved through the gear shifting part.

### DESCRIPTION OF THE INVENTION

The object is reached by a command device as defined in claim 1. The dependent claims define particular embodiments of the invention.

### BRIEF DESCRIPTION OF THE DRAWINGS

Hereinafter, four embodiments of the invention are described, in order to allow the latter to be better understood, by way of non-limiting examples and with reference to the accompanying drawings, wherein:
- Figure 1 is a schematic top view of a motor vehicle according to a first embodiment of the invention, with parts removed for greater clarity;
- Figure 2 is a schematic view of a command device for the motor vehicle shown in Figure 1 in a first operating configuration;
- Figure 3 is a schematic view of the command device of Figure 2 in a second operating configuration;
- Figure 4 is a partial view of the command device of Figures 2 and 3 with parts removed for greater clarity;
- Figure 5 is a schematic view of a command device for a motor vehicle according to a second embodiment of the invention and in a first operating configuration;
- Figure 6a is a schematic sectional view of the command device of Figure 5 and in a second operating configuration;
- Figure 6b is a schematic sectional view of the command device of Figure 5 in the first operating configuration;
- Figure 7 is a schematic view of a command device for a motor vehicle according to a third embodiment of the invention and in a first operating configuration;
- Figure 8 is a schematic view of the command device of Figure 7 in a second operating position;
- Figure 9 is a partial view of a command device according to a fourth embodiment of the invention, with parts removed for greater clarity;

### EMBODIMENTS OF THE INVENTION

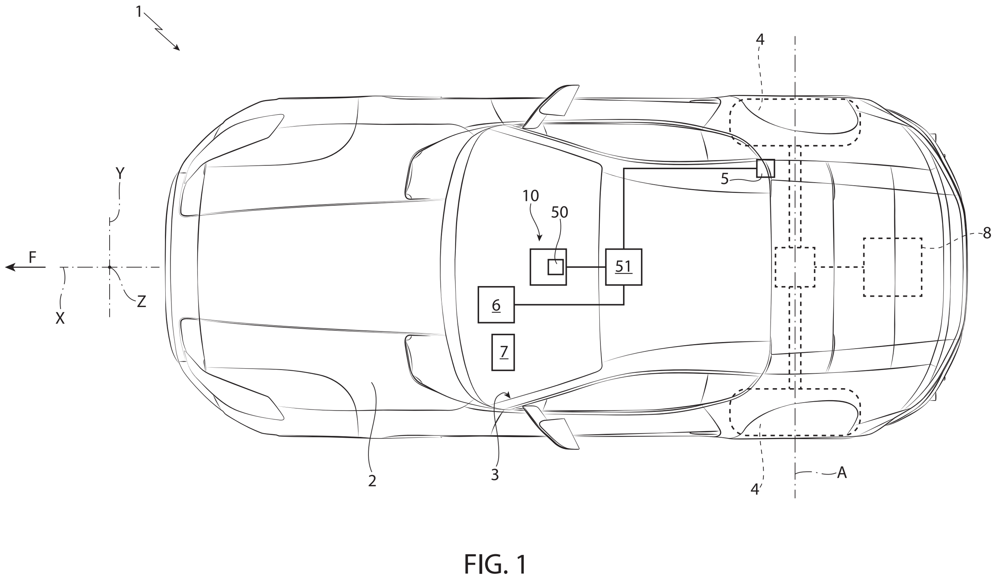

In Figures 1 to 4, reference number 1 is used to indicate, as a whole, a motor vehicle according to a first embodiment of the invention. Preferably, though not necessarily, the motor vehicle 1 is an electric or hybrid vehicle.

The motor vehicle 1 comprises (Figure 1):
- a frame 2 comprising a passenger compartment 3 configured to accommodate a driver and possible passengers;
- a plurality of wheels 4 (only two of them being shown, with dashed lines), each being able to rotate relative to the frame 2 about respective rotational axes A and respective steering axes; and
- a parking brake 5, which is known per se and is only schematically shown.

The motor vehicle 1 further comprises an electric motor 8, which is operatively connected to at least some of the wheels 4.

Inside the passenger compartment 3, the motor vehicle 1 also comprises a steering wheel 7, in particular located at a driver's seat and capable of rotating about a steering wheel axis. The steering wheel 7 has the known function of steering the motor vehicle 1.

The steering wheel 7 is preferably configured as described in Italian patent application IT1022000018495 filed on September 12, 2022 by the Applicant.

More in detail, the motor vehicle 1 comprises a known steering device, which is not shown herein and is configured to steer at least some of the wheels 4 about the respective steering axes in response to a rotation of the steering wheel 7 about the steering wheel axis and in a manner corresponding to a rotation angle of the steering wheel 7 about the steering wheel axis.

Preferably, the motor vehicle 1 also comprises a user interface 6 inside the passenger compartment 3, for example a control panel comprising a touch screen. In particular, the user interface 6 is located at a dashboard of the motor vehicle 1.

The motor vehicle 1 further comprises a command device 10 configured to select one or more functionalities of the motor vehicle 1 to be controlled or activated.

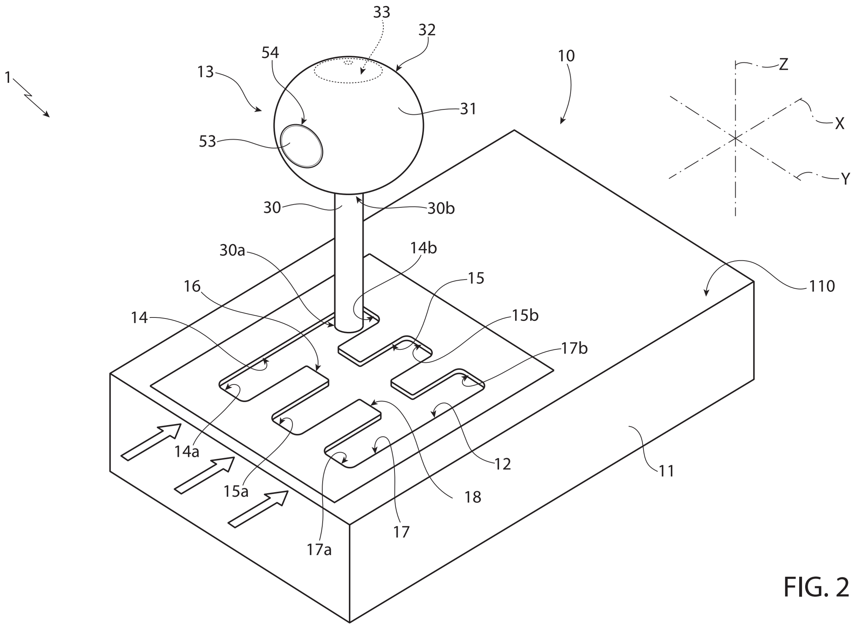

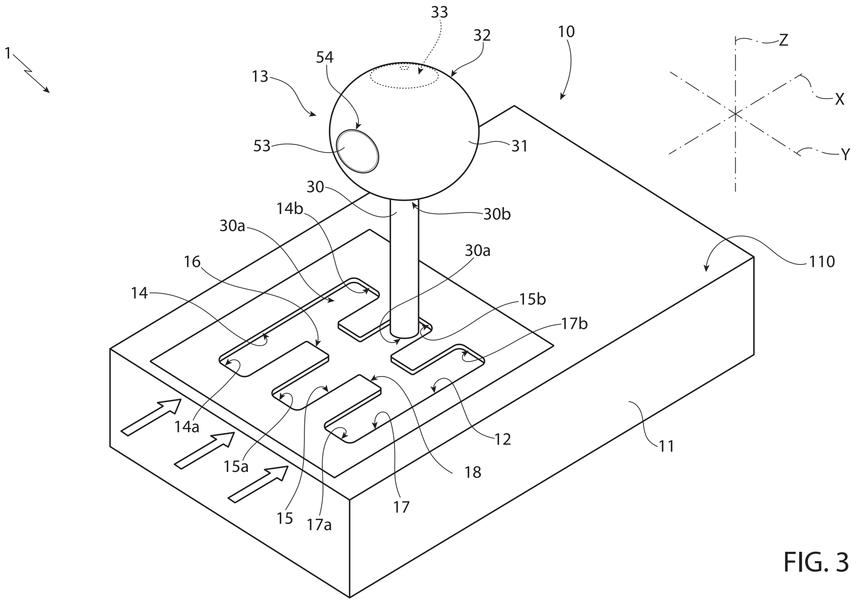

Advantageously, the command device 10 comprises (Figures 2 and 3) :
- a base 11 configured to be fixed at the passenger compartment 3 and comprising a guide 12;
- a movable selector 13 movable along the guide 12 between a plurality of positions associated with respective functionalities of the motor vehicle 1, to control and/or activate them.

The command device 10 further comprises a transducer 50 configured to detect a quantity indicative of a movement of the movable selector 13 relative to the guide 12 or of the position of the movable selector 13 relative to the guide 12 (Figure 1). The transducer 50 is also configured to generate a signal corresponding to the detected quantity.

The command device 10 also comprises an electronic control unit 51, which is operatively connected to the transducer 50 (Figure 1). The electronic control unit 51 is configured to extract information relating to the movement or the position of the movable selector 13 relative to the guide 12 from the signal generated by the transducer 50 and to command the control or the activation of the corresponding functionality of the motor vehicle 1 based on this information. In detail, the electronic control unit 51 is configured to control or activate the functionality of the motor vehicle 1 corresponding to the detected and/or determined position of the movable selector 13 relative to the guide 12.

The fact that the electronic control unit 51 is configured to activate a functionality of the motor vehicle 1 means that the electronic control unit 51 controls the activation and/or the movement of one or more components of the motor vehicle 1 and the possible coordination thereof so as to enable the execution of said functionality.

As shown in Figures 2 and 3, the movable selector 13 comprises:
- a stem 30 extending along a direction Z, which is vertical to the ground on which the wheels 4 rest; and
- a knob 31 integral to the stem 30.

In detail, the stem 30 comprises two ends 30a, 30b, which are opposed to one another along the direction Z. In further detail, the stem 30 engages the guide 12 on the side of the end 30a and the knob 31 is connected to the stem 30 on the side of the end 30b.

In the non-limiting embodiment shown, considering a section plane orthogonal to the direction Z, the stem 30 has a circular cross section. Preferably, moreover, the cross section of the stem 30 has a constant extension along the direction Z.

In addition, in the non-limiting embodiment shown, the knob 31 has a spherical or substantially spherical shape. In particular, the knob 31 comprises a surface 32 that can be touched and/or grasped by a user of the motor vehicle 1.

It is also possible to define a direction X and a direction Y of the motor vehicle 1, which are orthogonal to one another and to the direction Z. Preferably, though not necessarily, the direction X coincides with the longitudinal extension direction of the motor vehicle 1 (Figure 1).

As shown in Figures 2 and 3, the guide 12 comprises:
- a stretch 14 extending along the direction X;
- a stretch 15 also extending along the direction X and spaced apart from the stretch 14 along the direction Y;
- a stretch 16 extending from the stretch 14 to the stretch 15 along the direction Y;
- a stretch 17 extending along the direction X and spaced apart from the stretch 15 along the direction Y; and
- a stretch 18 extending from the stretch 15 to the stretch 17 along the direction Y.

The stretches 14, 15 and 17 comprise respective ends 14a, 14b, 15a, 15b, 17a, 17b, which are opposed to one another along the direction X. Each end 14a, 14b, 15a, 15b, 17a, 17b is associated with a respective functionality of the motor vehicle 1 to be controlled or activated and the movable selector 13 can be positioned at one of the ends 14a, 14b, 15a, 15b, 17a, 17b to select the respective functionality.

In detail, the stretches 14, 15, 16, 17 and 18 are straight and comprise respective openings obtained in the base 11 and contiguous with one another. In the embodiment shown, the openings defining the stretches 14, 15, 16, 17 and 18 have a rectangular shape.

More in detail, the base 11 comprises a surface 110 facing the movable selector 13. The openings of the stretches 14, 15, 16, 17 and 18 are obtained at the surface 110. Preferably, moreover, the surface 110 is flat.

In further detail, the stretch 16 extends at an intermediate position and, specifically, a median position of the stretches 14 and 15 along the direction X; similarly, the stretch 18 extends at an intermediate position and, specifically, a median position of the stretches 15 and 17 along the direction X. Furthermore, the stretches 16 and 18 are preferably aligned with one another.

The fact that the movable selector 13 is positioned at one end 14a, 14b, 15a, 15b, 17a, 17b means that the movable selector 13 is in contact with the end, near the end and/or that it is located in the space between the stretch 16 or 18 and the end along the direction X.

In the embodiment shown, the extension of the stretches 14, 15 and 17 along the direction X is the same for all the stretches 14, 15 and 17. Similarly, the extension of the stretches 16 and 18 along the direction Y is the same for both the stretches 16 and 18.

In other words, the guide 12 defines a grid in the base 11.

By way of non-limiting example, the six ends 14a, 14b, 15a, 15b, 17a, 17b are associated with the following functionalities of the motor vehicle 1:
- movement of the motor vehicle 1 in an advancement direction F ("*drive*" function);
- activation of the parking brake 5 (*"parking"* function);
- dynamic traction control, in which different wheels 4 are supplied with different amounts of torque (*"torque vectoring"* or *"torque steering"* function);
- steering of at least some of the wheels 4 about the respective steering axes according to the angle of the steering wheel 7 about the steering wheel axis (*"normal steering"* function). In particular, according to this functionality, the steering of the motor vehicle 1 is not obtained (only) by supplying different amounts of torque to the wheels 4 along the respective rotation axes A;
- movement of the motor vehicle in a direction contrary to the advancement direction F (*"reverse"* function);
- start of the motor vehicle 1 from a stationary condition, in which it is stationary relative to a fixed reference system (*"launch control"* function);
- neutral or neutral emulator (*"neutral"* function). In this condition, the electric motor 8 does not supply torque to the wheels 4;
- dynamic braking control.

Preferably, the neutral functionality is associated with the stretches 16 and/or 18.

Furthermore, preferably, the control device 13 is configured to be moved along the guide 12 so that the stem 30 remains constantly parallel or substantially parallel to the direction Z.

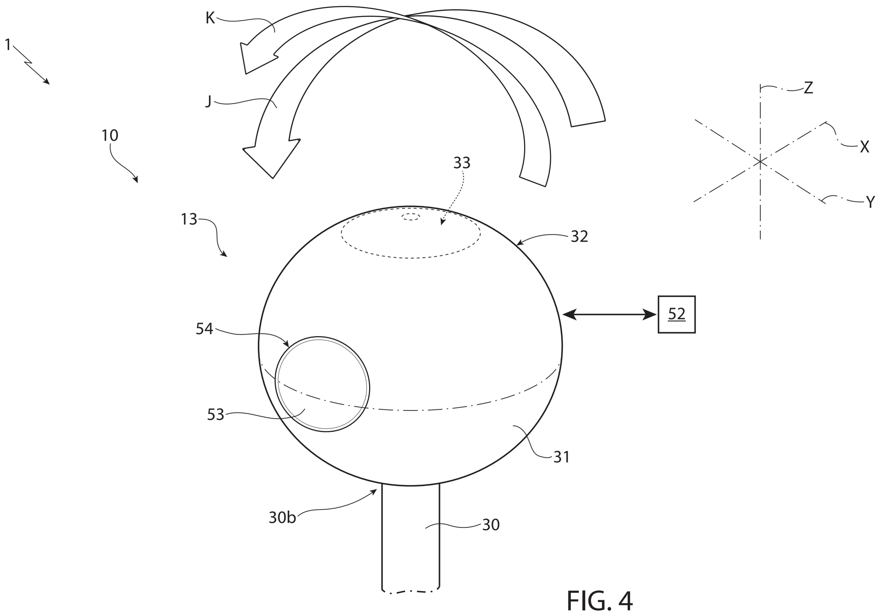

Advantageously, the surface 32 comprises a region 33 and the knob 31 also comprises a tactile sensor 52 (only schematically shown in Figure 4), which is configured to detect a touch by the user at least at the region 33 and to generate a signal indicative of said touch.

The electronic control unit 51 is operatively connected to the tactile sensor 52 and is configured to control two operating parameters of the motor vehicle 1 based on the signal received from the tactile sensor 52. In detail, the electronic control unit 51 is configured to extract information relating to the user's touch on the surface 32 from the signal generated by the touch sensor 52 and to consequently command the variation of the operating parameters.

Preferably, the tactile sensor 52 is capacitive.

In detail, the electronic control unit 51 is configured to (Figure 4):
- control the first parameter when the tactile sensor 52 detects a touch along a first direction J;
- control the second parameter when the tactile sensor 52 detects a touch along a second direction K, which is transversal to the first direction J.

In further detail, the electronic control unit 51 is configured to increase the value of the first parameter when the touch sensor 52 detects a touch along the first direction J and in a first sense and to reduce it when the touch sensor 52 detects a touch along the first direction J and in a second sense contrary to the first sense. Similarly, the electronic control unit 51 is configured to increase the value of the second parameter when the tactile sensor 52 detects a touch along the second direction K and in a third sense and to reduce it when the tactile sensor 52 detects a touch along the second direction K and in a fourth sense contrary to the third sense.

Preferably, the region 33 has the shape of a spherical cap and is located at a tip of the knob 31 along the direction Z, namely on the side facing away from the stem 30.

Furthermore, preferably, the touch of the user on the knob 31 for controlling the first parameter and the second parameter is performed by the user's hand, for example by the thumb.

The command device 10 further comprises a selector 53 operatively connected to the electronic control unit 51 and capable of being selectively shifted to a first state and a second state. In detail, the selector 53, in the first state, is configured to deactivate the knob 31, namely to deactivate at least one of the electronic control unit 51 and the tactile sensor 52; the selector 53, in the second state, is configured to activate or keep the knob 31 activated, namely to activate or keep the electronic control unit 51 and the tactile sensor 52 activated.

In other words, the electronic control unit 51 is configured to allow the operating parameters to be controlled based on the user's touch on the region 33 when the selector 53 is in the first state.

The selector 53 comprises a capacitive button. Preferably, the selector 53 comprises lighting means configured to light up when the selector 53 is in the first state and to turn off when the selector 53 is in the second state or to emit lights of a first colour (for example, green) when the selector 53 is in the first state and lights of a second colour (for example, red) when the selector 53 is in the second state.

Alternatively, the selector 53 comprises a mechanical button configured to assume a first position associated with the first state and a second position associated with the second state.

In detail, the selector 53 is located at the knob 31. In further detail, the selector 53 is located at the surface 32. Specifically, the selector 53 is located at the maximum circumference of the surface 32 along the direction Z. Therefore, the selector 53 is interposed between the stem 30 and the region 33 along the direction Z.

Preferably, the selector 53 is configured to be moved between the first state and the second state due to a contact with the user's hand, for example with the index finger of the hand.

In the non-limiting embodiment shown in Figure 4, the selector 53 comprises a circular or substantially circular perimeter 54, which delimits it with respect to the rest of the surface 32.

Preferably, the parameters controlled by the knob 31 can be selected by the user, namely they can be chosen from a plurality of controllable parameters.

In detail, the selector 53 can selectively be positioned in a plurality of third states, each associated with a different parameter or pair of parameters to be controlled among the plurality of controllable parameters. In other words, the selector 53 is configured to enable the selection of the parameters to be controlled by means of the knob 31 among the controllable parameters as a function of the third state to which it is shifted.

Alternatively or in addition, the parameters that can be controlled by the user by means of the knob 31 are related to the functionality or functionalities selected by means of the movable selector 13. In other words, the parameters that can be controlled by means of the knob 31 vary depending on the position of the movable selector 13 relative to the guide 12.

Alternatively or in addition, the parameters that can be controlled by the user by means of the knob 31 can be selected through the user interface 6. Furthermore, the user interface 6 is preferably configured to display information associated with the value of the parameters controlled by means of the knob 31, for example, in the form of a bar indicator, a numerical value and/or a Cartesian diagram. Preferably, the user interface 6 is configured to display a Cartesian diagram, in which a value of the first parameter is associated with the abscissa axis and a value of the second parameter is associated with the ordinate axis.

By way of example, the first parameter is related to the steering gain or coincides with the steering gain. In other words, by varying the first parameter, given the same angle of rotation of the steering wheel 7 about the steering wheel axis, the extent of steering of the wheels 4 about the respective steering axes is changed. The second parameter is related to the torque gain or coincides with the torque gain. In other words, by varying the second parameter, it is possible to change the maximum amount of driving torque delivered to the wheels 4.

Alternatively, still by way of example, the first parameter and the second parameter are associated with the distribution of driving or braking torque between the wheels 4.

The operation of the motor vehicle 1 will be described below.

In use, the user controls a plurality of functionalities of the motor vehicle 1 by moving the movable selector 13 relative to the guide 12 between the various ends 14a, 14b, 15a, 15b, 17a, 17b and the stretches 16 and 18. The electronic control unit 51 receives from the transducer 50 the information relating to the movement or the position of the movable selector 13 relative to the guide 12 and, as a consequence, commands the activation of the functionality of the motor vehicle 1 associated with the end 14a, 14b, 15a, 15b, 17a, 17b or the stretch 16, 18 at which the movable selector 13 has been positioned.

For example, in order to move the movable selector 13 from the end 14b (Figure 2) to the end 15b (Figure 3), it is necessary to translate the movable selector 13 parallel to the direction X towards the end 14a and stop at the stretch 16. Subsequently, the movable selector 13 needs to engage the stretch 16 and slide along it towards the stretch 15. Finally, once the stretch 15 is engaged, the movable selector 13 must slide parallel to the direction X towards the end 15b.

At the same time, the user can vary the value of two parameters of the motor vehicle 1 by means of the knob 31.

At first, the user activates the knob 31 by pressing the selector 53, so as to shift it to the first state, and then by touching the surface 32 of the knob 31. In detail, by sliding the finger along the direction J, the first parameter is varied; by sliding the finger along the direction K, the second parameter is varied. The electronic control unit 51 receives from the tactile sensor 52 the information relating to the user's touch on the surface 32 and, as a consequence, commands the variation of the operating parameters.

The user can choose the parameters that can be controlled with the knob 31 by pressing the selector 53 several times, so as to shift it to a third state, and/or by moving the movable selector 13 relative to the guide 12 and/or by selecting them through the user interface 6.

In order to deactivate the parameter control by means of the knob 31, the user presses the selector 53 until it shifts to the second state.

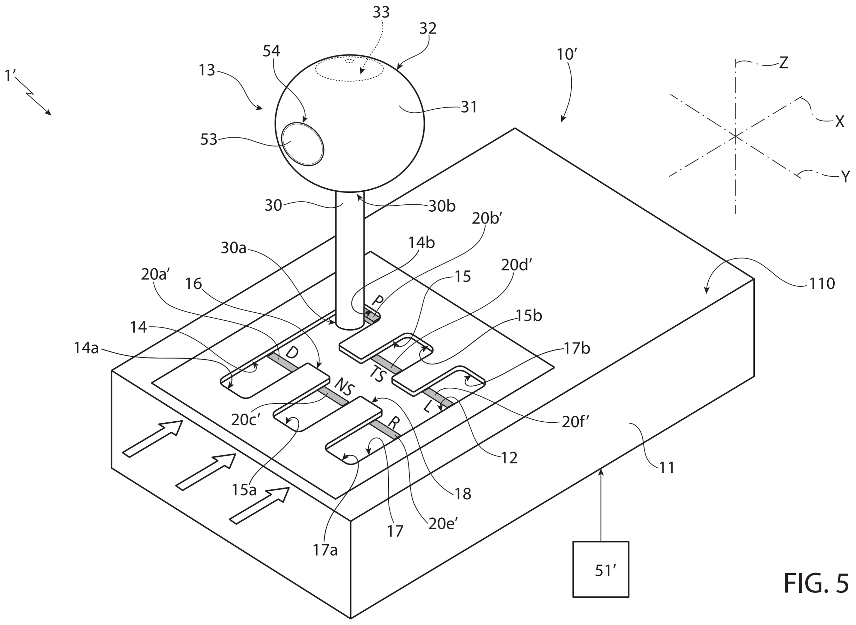

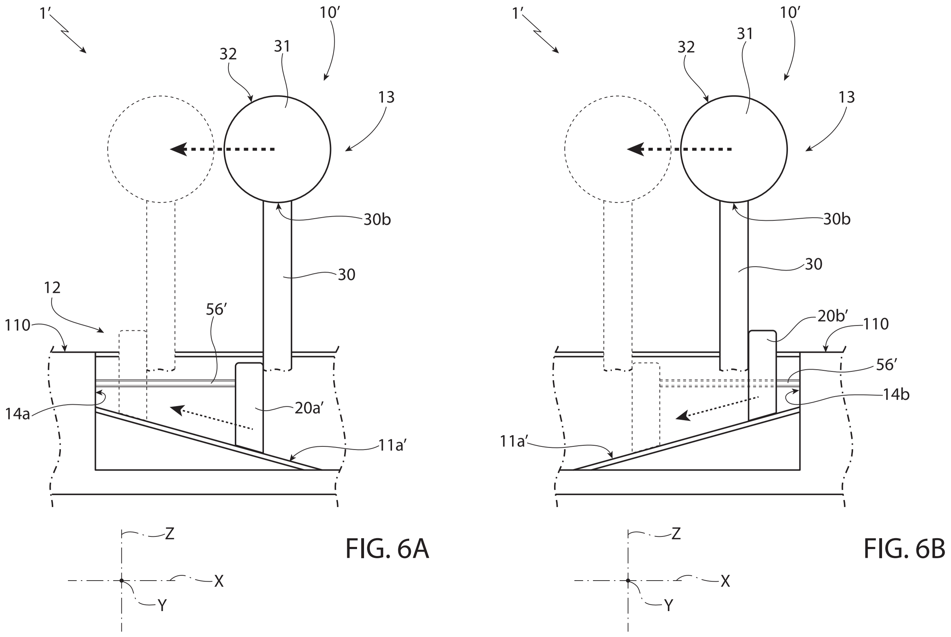

With reference to Figures 5, 6a and 6b, number 1' indicates a motor vehicle according to a second embodiment of the invention. The motor vehicle 1' is similar to the motor vehicle 1 and will be described below only in those aspects that distinguish the former from the latter; similar or equivalent parts of the motor vehicles 1; 1' will be indicated, when possible, with the same reference numbers.

The motor vehicle 1' differs from the motor vehicle 1 in that it comprises a command device 10' in place of the command device 10. The command device 10' is similar to the command device 10 and will be described below only in those aspects that distinguish the former from the latter; identical or equivalent parts of the command devices 10, 10' will be indicated, when possible, with the same reference numbers.

The command device 10' differs from the command device 10 in that it comprises a plurality of selectors 20a', 20b', 20c', 20d', 20e', 20f' movable with respect to the grid 12. In detail, the selectors 20a', 20b', 20c', 20d', 20e', 20f' can slide relative to the grid 12 along the direction X.

The command device 10' comprises two selectors 20a', 20b', 20c', 20d', 20e', 20f' at each stretch 14, 15 and 17. In further detail, the selectors 20a', 20b', 20c', 20d', 20e', 20f' are located in the space interposed between the stretch 16 or 18 and the ends 14a, 14b, 15a, 15b, 17a, 17b along the direction X.

Each selector 20a', 20b', 20c', 20d', 20e', 20f' can be set to an activation state or a deactivation state. In particular, when the selector 20a', 20b', 20c', 20d', 20e', 20f' is in the activation state, the functionality of the motor vehicle 1' associated with the respective end 14a, 14b, 15a, 15b, 17a, 17b is selected and/or activated; when the selector 20a', 20b', 20c', 20d', 20e', 20f' is in the deactivation state, the functionality of the motor vehicle 1' associated with the respective end 14a, 14b, 15a, 15b, 17a, 17b is deselected and/or deactivated.

In addition, when the selector 20a', 20b', 20c', 20d', 20e', 20f' is in the activation state, it is in a position close to the respective end 14a, 14b, 15a, 15b, 17a, 17b, 17b, 17b, in which the distance between the selector 20a', 20b', 20c', 20d', 20e', 20f' and the respective end 14a, 14b, 15a, 15b, 15b, 17a, 17b along the direction X is equal to a first value; when the selector 20a', 20b', 20c', 20d', 20e', 20f' is in the deactivation state, it is in a position spaced apart from the respective end 14a, 14b, 15a, 15b, 17a, 17b, 17b, in which the distance between the selector 20a', 20b', 20c', 20d', 20e', 20f' and the respective end 14a, 14b, 15a, 15b, 17a, 17b along the direction X is equal to a second value, which is greater than the first value. In particular, the first value could be zero.

By way of example, Figures 5 and 6B show the selector 20b' in the activation state and the remaining selectors 20a', 20c', 20d', 20e', 20f' in the respective deactivation states.

In the embodiment shown, the base 11 comprises a plurality of guiding surfaces 11a' and the selectors 20a', 20b', 20c', 20d', 20e', 20f' comprise respective slider elements, which are each configured to cooperate in contact with a respective guiding surface 11a' (Figures 6a and 6b).

In detail, the guiding surfaces 11a' are flat and inclined relative to a plane defined by the directions X and Y and each slider element of the selectors 20a', 20b', 20c', 20d', 20e', 20f' comprises a respective flat surface that is inclined relative to the same plane defined by the directions X and Y.

More in detail, proceeding parallel to the direction X in the sense oriented from the stretches 16, 18 to the ends 14b, 15b and 17b, the distance between the points of the guiding surfaces 11a' and the surface 110 along the direction Z progressively decreases; similarly, proceeding parallel to the direction X in the sense oriented from the stretches 16, 18 to the ends 14a, 15a and 17a, the distance between the points of the guiding surfaces 11a' and the surface 110 along the direction Z progressively decreases (Figures 6a and 6b).

In further detail, the guiding surfaces 11a' are located on the side of the surface 110 facing away from the knob 31 along the direction Z.

As shown in Figures 6a and 6b, preferably, when a selector 20a', 20b', 20c', 20d', 20e', 20f' is in the activation configuration, it protrudes relative to the surface 110 along the direction Z.

Each selector 20a', 20b', 20c', 20d', 20e', 20f' is configured to cooperate in contact with the movable selector 13. In detail, each selector 20a', 20b', 20c', 20d', 20e', 20f' is configured to be moved from the deactivation state to the activation state due to the movement of the movable selector 13 relative to the guide 12. Specifically, the movable selector 13 is configured to drag the selectors 20a', 20b', 20c', 20d', 20e' and 20f' along the direction X relative to the respective guiding surfaces 11a'.

The command device 10' further comprises a plurality of actuators 56', which are each configured to move a respective selector 20a', 20b', 20c', 20d', 20e' and 20f' between the respective activation and deactivation states in an automatic manner and are and operatively connected to the electronic control unit 51'. For example, the actuators 56' are electromechanical actuators.

The electronic control unit 51' is configured to:
- store whether the selectors 20a', 20b', 20c', 20d', 20e' and 20f' are in their respective activation states or in their respective deactivation states;
- detect and store when a selector 20a', 20b', 20c', 20d', 20e' and 20f' is moved to the respective activation state by means of the movable selector 13.

The electronic control unit 51' is also configured to control that a selector 20a', 20b ', 20c', 20d ', 20e', 20f' in the activation state, in which it activates a first functionality of the motor vehicle 1', is moved to the deactivation state when another selector 20b', 20c', 20d ', 20e', 20f' is set to the activation state, in which it activates a second functionality of the motor vehicle 1', which is contrary to or conflicting or incompatible with the first functionality.

For example, if the selector associated with the drive functionality of the motor vehicle 1' in the advancement direction F is in the activation state, the electronic control unit 51' is configured to control the actuator 56' associated with the aforementioned selector so as to automatically move it to the deactivation state when another selector, which is associated with the drive functionality of the motor vehicle in the direction contrary to the advancement direction F, is moved to the activation state.

Vice versa, the electronic control unit 51' is also configured to control that a selector 20a', 20b ', 20c', 20d ', 20e', 20f' remains in the activation state, in which it activates a first functionality of the motor vehicle 1', if another selector 20b', 20c', 20d', 20e', 20f' is set to the activation state, in which it activates a second functionality of the motor vehicle 1' and said second functionality is compatible, can coexist and/or does not clash with the first functionality.

Alternatively or in addition, if a selector 20a', 20b', 20c', 20d', 20e', 20f' is in the activation state, the electronic control unit 51' is configured to have the actuator 56' associated with the aforementioned selector 20a', 20b', 20c ', 20d', 20e ', 20f' move it to the deactivation state, when the movable selector 13 is initially moved away from the selector 20a', 20b', 20c', 20d', 20e', 20f' and subsequently brought into contact with it or moved near it (for example, in the portion of the stretch 14, 15, 17 that contains said selector 20a', 20b', 20c', 20d', 20e', 20f').

In the non-limiting embodiment shown, the ends 14a, 14b, 15a, 15b, 17a, 17b are associated with the functionalities of the motor vehicle 1 as follows:
- the end 14a is associated with the movement of the motor vehicle 1 in the advancement direction F (*"drive"* function);
- the end 14b is associated with the activation of the parking brake 5 (*"parking"* function);
- the end 15a is associated with the steering of at least some of the wheels 4 about the respective steering axes according to the angle of the steering wheel 7 about the steering wheel axis (*"normal steering"* function);
- the end 15b is associated with the dynamic traction control (*"torque vectoring"* or *"torque steering"* function);
- the end 17a is associated with the movement of the motor vehicle in a direction contrary to the advancement direction F (*"reverse"* function);
- the end 17b is associated with the start of the motor vehicle 1 from a stationary condition, in which it is stationary relative to a fixed reference system (*"launch control"* function).

The operation of the motor vehicle 1' is similar to the operation of the motor vehicle 1 and will be described below only insofar as it differs from it.

In use, the user controls a plurality of functionalities of the motor vehicle 1' by moving the movable selector 13 relative to the guide 12 and by having it cooperate in contact with the selectors 20a', 20b', 20c', 20d', 20e', 20f'.

For example, at the end of a parking manoeuvre, the user moves the movable selector 13 towards the end 14b', causing the selector 20b' to move to the activation state. The electronic control unit 51' detects that the selector 20b' is in the activation state and stores this information.

If the movable selector 13 is brought to cooperate in contact with the selector 20a' and moves it to the activation state to start a forward movement of the motor vehicle 1', the electronic control unit 51' causes the actuator 56' associated with the selector 20b' to move it to the deactivation state.

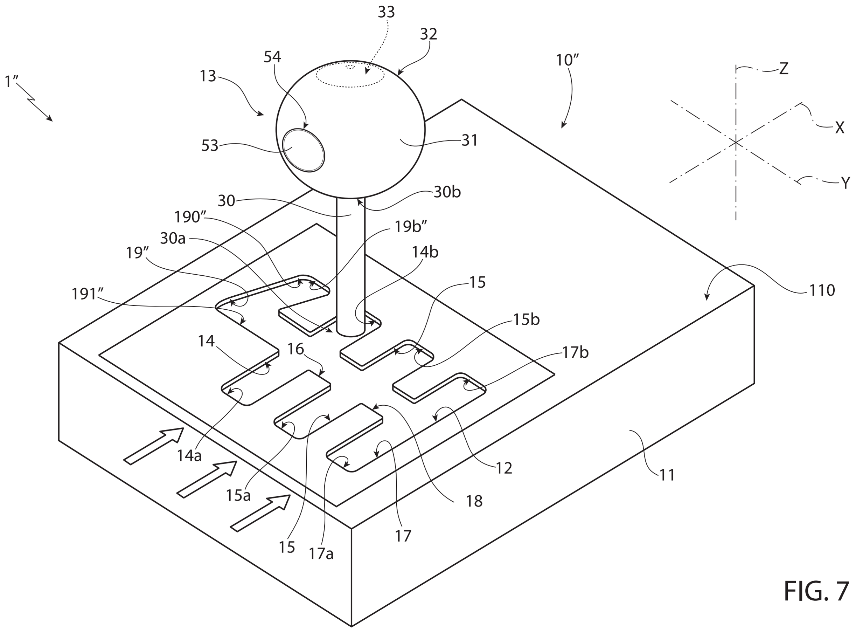

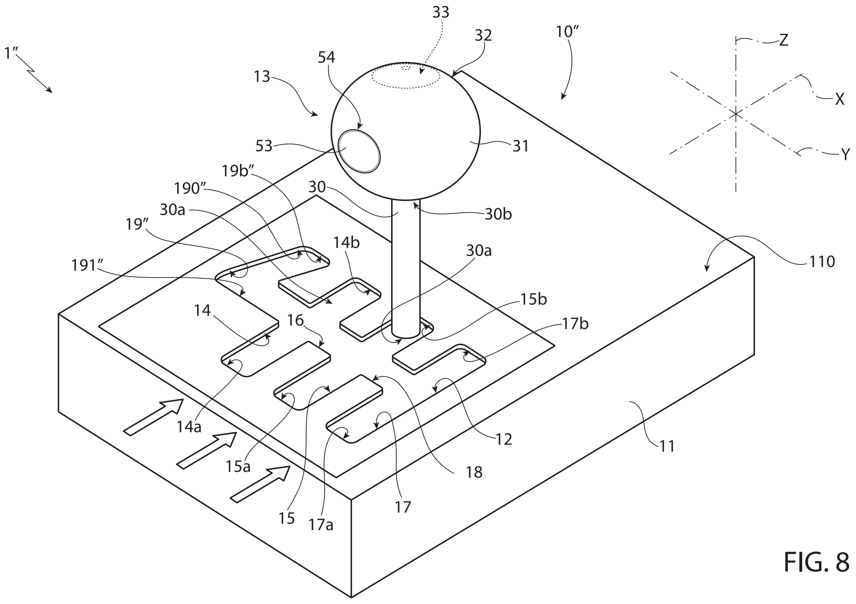

With reference to Figures 7 and 8, number 1'' indicates a motor vehicle according to a third embodiment of the invention. The motor vehicle 1'' is similar to the motor vehicle 1 and will be described below only in those aspects that distinguish the former from the latter; similar or equivalent parts of the motor vehicles 1; 1'' will be indicated, when possible, with the same reference numbers.

The motor vehicle 1'' differs from the motor vehicle 1 in that it comprises a command device 10'' in place of the command device 10. The command device 10'' is similar to the command device 10 and will be described below only in those aspects that distinguish the former from the latter; identical or equivalent parts of the command devices 10, 10" will be indicated, when possible, with the same reference numbers.

In particular, the command device 10'' differs from the command device 10 in that it comprises a guide 12'' instead of the guide 12.

The guide 12" comprises a further stretch 19", which is located on the side of the stretch 14 opposed to the stretch 15 along the direction Y. In detail, the stretch 19" comprises:
- a portion 190'' extending transversely to the direction X; and
- a portion 191 extending from the stretch 14 to the portion 190'' along the direction Y.

The stretch 19'' comprises an end 19b'', which is associated with a functionality of the motor vehicle 1 to be controlled or activated. In detail, the end 19b'' is located at and/or is part of the portion 190''. In further detail, the end 19b'' is aligned with the end 14b.

The movable selector 13 can also be positioned at the end 19b'' to select the relative functionality.

In detail, the portions 190'' and 191'' are straight and comprise respective openings obtained in the base 11. In further detail, the openings corresponding to the portions 190'' and 191'' are contiguous with one another and with the openings of the stretches 14, 15, 16, 17 and 18. In the embodiment shown, furthermore, the openings defining the portions 190'' and 191'' have a rectangular shape.

In further detail, the portion 191" is aligned with the stretch 16.

In the embodiment shown, the extension of the portion 190" along the direction X is the same as that of the stretches 14, 15 and 17. In addition, preferably, the extension of the portion 191'' along the direction Y is the same as that of the stretches 16 and 18.

In other words, the stretch 19" has the shape of an L in a plane orthogonal to the direction Z. Specifically, proceeding along the direction X in the sense oriented from the portion 191'' to the end 19b'', the distance between the points of the portion 190'' and the stretch 14 along the direction Y progressively decreases.

Preferably, the end 19b'' is associated with the activation and/or the control of the functionality of the movement of the motor vehicle in a direction contrary to the advancement direction F (*"reverse"* function);

The operation of the motor vehicle 1" is similar to the operation of the motor vehicle 1. Therefore, its detailed description is omitted for reasons of brevity.

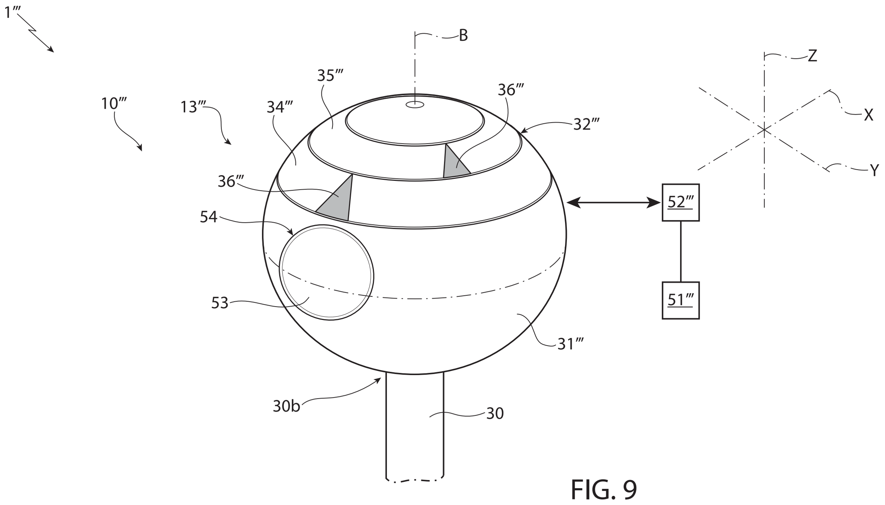

With reference to Figure 9, number 1‴ indicates a motor vehicle according to a fourth embodiment of the invention. The motor vehicle 1‴ is similar to the motor vehicle 1 and will be described below only in those aspects that distinguish the former from the latter; similar or equivalent parts of the motor vehicles 1; 1‴ will be indicated, when possible, with the same reference numbers.

The motor vehicle 1‴ differs from the motor vehicle 1 in that it comprises a command device 10‴ in place of the command device 10. The command device 10‴ is similar to the command device 10 and will be described below only in those aspects that distinguish the former from the latter; identical or equivalent parts of the command devices 10, 10''' will be indicated, when possible, with the same reference numbers.

In particular, the command device 10‴ differs from the command device 10 in that it comprises a knob 31‴ instead of the knob 31.

The knob 31‴ is similar to the knob 31 and comprises:
- two elements 34‴, 35''', which are rotatable relative to the surface 32‴ about a rotation axis B;
- a transducer 52‴ configured to detect a quantity indicative of the positions of the elements 34‴ and 35‴ relative to the rotation axis B and/or of the rotation of the elements 34‴ and 35‴ about the rotation axis B or to generate a signal corresponding to the detected quantity.

In detail, the rotation axis B is oriented parallel to the direction Z. In addition, the elements 34‴ and 35‴ can be rotated about the rotation axis B independently of one another.

The electronic control unit 51‴ is operatively connected to the transducer 52‴ and is configured to control two operating parameters of the motor vehicle 1‴ based on the signal received from the transducer 52‴. In detail, the electronic control unit 51‴ is configured to extract information relating to the positions of the elements 34‴ and 35‴ relative to the rotation axis B and/or to the rotation of the elements 34''' and 35‴ about the rotation axis B from the signal generated by the transducer 52‴ and to consequently command the variation of the operating parameters.

In detail, the electronic control unit 51‴ is configured to:
- control the first parameter when the element 34‴ is rotated about the rotation axis B;
- control the second parameter when the element 35‴ is rotated about the rotation axis B.

In further detail, the electronic control unit 51‴ is configured to increase the value of the first parameter when the element 34‴ is rotated in a first rotation direction about the rotation axis B and to reduce it when the element 34‴ is rotated in a second rotation direction contrary to the first one. Similarly, the electronic control unit 51‴ is configured to increase the value of the second parameter when the element 35‴ is rotated in the first rotation direction and to reduce it when the element 35‴ is rotated in the second rotation direction.

Preferably, the elements 34‴ and 35‴ have the shape of rings with a spherical surface. In other words, the elements 34''' and 35‴ each comprise a respective ring nut. In detail, the elements 34‴ and 35‴ are arranged one on top of the other parallel to the rotation axis B. In further detail, the elements 34‴ and 35‴ are juxtaposed parallel to the rotation axis B.

Preferably, the rotation of the elements 34‴ and 35‴, for controlling the first and the second parameter, respectively, can be performed by the user's hand, for example by the thumb and the index finger.

In the embodiment shown, the elements 34‴ and 35‴ each also comprise a respective symbol 36‴ adapted to indicate the angular position of the elements 34‴ and 35‴ about the rotation axis B. The symbol 36‴ is an alphanumeric character, for example an arrow.

As is the case for the knob 31, the parameters controlled by the knob 31‴ can be selected by the user, namely they can be chosen from a plurality of controllable parameters, for example by means of the selector 53 and/or by means of the movable selector 13''' and/or by means of the user interface 6.

Owing to the above, the advantages of the invention are evident.

Since the command device 10; 10'; 10" ; 10‴ comprises the movable selector 13; 13‴, which is movable along the guide 12; 12'' between various positions to activate or select as many functions of the motor vehicle 1; 1'; 1"; 1‴, it is possible to control numerous variables of the motor vehicle 1; 1'; 1"; 1‴ in an easy and versatile manner. This applies, in particular, to hybrid or electric motor vehicles.

Since the guide 12; 12'' is shaped like a grid, the movement of the movable selector 13; 13‴ can be carried out in a practical and intuitive manner. In detail, the fact that the guide 12; 12'' comprises a plurality of ends 14a, 14b, 15a, 15b, 17a, 17b; 14a, 14b, 15a, 15b, 17a, 17b, 19b" and the stretches 16, 18 allows users to select/activate or deselect/deactivate numerous functionalities of the motor vehicle 1; 1'; 1''; 1‴ in a simple and compact manner.

Since the command device 10' comprises the selectors 20a', 20b ', 20c', 20d ', 20e', 20f', it is possible to activate more functionalities of the motor vehicle 1' at the same time. In fact, the selectors 20a', 20b', 20c', 20d', 20e', 20f' remain in their respective activation states as long as non-compatible functionalities of the motor vehicle 1' are activated.

Since the command device 10; 10'; 10'' comprises the tactile sensor 52, which is configured to detect the user's touch, one or more parameters of the motor vehicle 1; 1' can be varied by touching the knob 31 in a convenient and simple manner.

Since the command device 10‴ comprises the elements 34‴ and 35‴, one or more parameters of the motor vehicle 1‴ can be varied by conveniently rotating said elements 34''' and 35‴ about the rotation axis B in a convenient and simple manner.

Finally, the command device 10; 10'; 1''; 1‴ and the motor vehicle 1; 1'; 1''; 1‴ according to the invention can be subjected to changes and variants, which, though, do not go beyond the scope of protection set forth in the appended claims.

The functionalities of the motor vehicle 1; 1'; 1" ; 1‴ that can be controlled by the user by moving the movable selector 13; 13‴ relative to the guide 12; 12'' could be different from those listed above. For example, the functionalities could comprise varying at least one control variable of the wheels 4 and/or varying at least one control variable of suspensions of the motor vehicle 1; 1'; 1" ; 1‴. The same applies to the parameters that can be controlled by means of the knob 13; 13‴.

The guide 12 could be shaped differently from the one shown. In detail, the guide 12 could have a number of stretches 14, 15, 17 other than three and/or a number of ends 14a, 14b, 15a, 15b, 17a, 17b other than six. For example, the guide 12 could have a number of ends 14a, 14b, 15a, 15b, 17a, 17b that is smaller than or larger than six. In addition, the stretches 14, 15, 17 could be at least partially curved and not straight.

The guide 12'' could be shaped differently from the one shown. In detail, the guide 12'' could have a number of stretches 14, 15, 17, 19'' other than four and/or a number of ends 14a, 14b, 15a, 15b, 17a, 17b, 19b'' other than seven. For example, the guide 12'' could have a number of ends 14a, 14b, 15a, 15b, 17a, 17b that is smaller than or larger than seven. In addition, the stretches 14, 15, 17, 19b'' could be at least partially curved and not straight.

The tactile sensor 52 could be a resistive sensor, of the surface acoustic wave or optical imaging type.

The electronic control unit 51; 51‴ could be configured to control one single operating parameter or more than two operating parameters of the motor vehicle 1; 1'; 1"; 1‴ based on the signal received from the tactile sensor 52 or the transducer 52‴.

The command device 10"; 10‴ could comprise the selectors 20a', 20b', 20c', 20d', 20e', 20f'.

The command device 10; 10'; 10‴ could comprise the guide 12".

The knob 31‴ could comprise only one of the elements 34‴ and 35‴ instead of both. Alternatively, the knob 31‴ could comprise more than two elements 34‴, 35‴, each capable of rotating relative to the surface 32‴ about the rotation axis B and associated with respective different parameters of the motor vehicle 1‴.

The knob 31‴ could also comprise the region 33 and the tactile sensor 52.

The selectors 20a', 20b', 20c', 20d', 20e', 20f' could comprise respective capacitive buttons. In detail, the selectors 20a', 20b', 20c', 20d', 20e', 20f' could comprise respective lighting means configured to light up when the relative selector is in the activation state and to turn off when the selector is in the deactivation state or to emit lights of a first colour (for example, green) when the selector is in the activation state and lights of a second colour (for example, red) when the selector is in the deactivation state.

Alternatively, the selectors 20a', 20b', 20c, 20d', 20e', 20f' comprise respective mechanical buttons configured to each assume a first position associated with the activation state and a second position associated with the deactivation state.

The command device 10' comprises selectors 20a', 20b', 20c', 20d', 20e', 20f' at only some of the stretches 14, 15, 17.

In addition, the electronic control units 51, 51', 51‴ could be distinct from one another or coincide.

## Claims

1. A command device (10; 10'; 10''; 10‴) for a motor vehicle (1; 1'; 1''; 1‴) comprising:
- a base (11; 11') configured to be fixed to a portion (2) of said motor vehicle (1; 1'; 1''; 1‴); said base (11; 11') comprising a guide (12; 12'');
- a movable selector (13; 13‴), which is movable along said guide (12; 12");
said movable selector (13; 13‴) comprising, in turn, a stem (30) and a knob (31; 31‴) operatively connected to said stem (30);
said knob (31; 31‴) comprising at least one selection device (32; 34‴, 35‴) configured to receive, in use, a input from a user and to generate a corresponding signal indicative of said input;
said command device (10; 10') further comprising an electronic control unit (51; 51'; 51‴) operatively connected to said selection device (32; 34‴, 35‴);
said electronic control unit (51; 51'; 51''') being configured to control at least one parameter associated with said motor vehicle (1; 1'; 1"; 1‴) based on said signal.

2. Command device according to claim 1, wherein said selection device (32) comprises a surface (32), which is tastable, in use, by a user of said motor vehicle (1; 1') and a tactile sensor (52);
said tactile sensor (52) being configured to detect a touch of the user on at least one region (33) of said surface (32) and to generate said signal based on said touch.

3. Command device according to claim 2, wherein said electronic control unit (51) is configured to:
- control a first said parameter associated with said motor vehicle (1; 1') when said tactile sensor (52) detects a touch along a first direction (J);
- control a second said parameter associated with said motor vehicle (1; 1') when said tactile sensor (52) detects a touch along a second direction (K), which is transversal to said first direction (J).

4. Command device according to claim 2 or 3, wherein said tactile sensor (52) is of the capacitive, resistive, surface acoustic wave or optical imaging type.

5. Command device according to claim 1, wherein said knob (31‴) comprises a surface (32‴) and said selection device (34‴; 35‴) comprises at least one element (34‴, 35‴) rotatable relative to said surface (32‴) about a rotational axis (B) and a transducer (52‴);
said transducer (52‴) being configured to detect the position or the rotation of said element (34‴, 35‴) relative to said rotational axis (B) and to generate said signal based on said position or rotation.

6. Command device according to claim 5, wherein said knob (31‴) comprises a first said element (34‴) and a second said element (35‴);
wherein said electronic control unit (51‴) is configured to:
- control a third said parameter associated with said motor vehicle (1‴) when said first element (34‴) is rotated, in use, about said rotational axis (B);
- control a fourth said parameter associated with said motor vehicle (1''') when said second element (35‴) is rotated, in use, about said rotational axis (B).

7. Command device according to any one of the preceding claims, wherein said parameter is at least one of a steering control variable of at least one wheel (4) of said motor vehicle (1; 1'; 1''; 1‴) and a control variable of a torque imparted, in use, to said wheels (4).

8. Command device according to any one of the preceding claims, comprising a further selector (53), which is configured to selectively activate at least one of said electronic control unit (51; 51'; 51‴) and said selection device (32; 34''', 35‴).

9. Command device according to any one of the preceding claims, wherein said parameter is selectable by the user.

10. Command device according to claims 8 and 9, wherein said further selector (53) is configured to allow the choice of said parameter between a plurality of said parameters controllable through said knob (31; 31‴).

11. Command device according to any one of claims 8 to 10, wherein said further selector (53) is arranged at said knob (31; 31‴).

12. Command device according to any one of claims 9 to 11, wherein said movable selector (13; 13‴) is movable along said guide (12; 12'') between at least a first position associated with a first functionality of said motor vehicle (1; 1'; 1"; 1‴) and a second position associated with a second functionality of said motor vehicle (1; 1'; 1''; 1‴) ;
said movable selector (13; 13‴) in said first position being configured to select said first functionality; said movable selector (13; 13‴) in said second position being configured to select said second functionality;
wherein said parameter is correlated to said first or second functionality selected, in use, by said movable selector (13; 13‴).

13. A motor vehicle (1; 1'; 1''; 1‴) comprising a command device (10; 10'; 10"; 10''') according to any one of the preceding claims.

14. Motor vehicle according to claim 13, when dependent on any one of claims 9 to 12, comprising a user interface (6) configured to allow the selection of said parameter.
